(19) Europäisches Patentamt

European Patent Office

Office européen des brevets

(11) **EP 4 679 704 A1**

(12) **EUROPEAN PATENT APPLICATION**

(43) Date of publication:
**14.01.2026 Bulletin 2026/03**

(21) Application number: **24187042.7**

(22) Date of filing: **08.07.2024**

(51) International Patent Classification (IPC):
$H02M\ 7/487^{(2007.01)}$ $\qquad H02M\ 7/5387^{(2007.01)}$
$H02M\ 1/12^{(2006.01)}$ $\qquad H02M\ 1/14^{(2006.01)}$
$H02M\ 1/32^{(2007.01)}$

(52) Cooperative Patent Classification (CPC):
**H02M 7/487; H02M 1/123; H02M 1/14; H02M 1/32; H02M 7/53876;** H02M 1/38

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ABB Schweiz AG**
**5400 Baden (CH)**

(72) Inventor: **BOILLAT, David**
**5223 Riniken (CH)**

(74) Representative: **Sykora & König Patentanwälte PartG mbB**
**Maximilianstraße 2**
**80539 München (DE)**

(54) **METHOD AND CONTROL UNIT FOR CONTROLLING AN ELECTRICAL CONVERTER, AND ELECTRICAL CONVERTER SYSTEM**

(57) A method for controlling an electrical converter (10) is described. The electrical converter (10) comprises a DC terminal (12) coupled to a DC device (26), an AC terminal (14) coupled to an AC device (28), and a DC-link (15) having a neutral interconnection point (NP) providing a neutral point voltage ($V_{NP}$), at least one positive interconnection point (Px) coupled to a positive potential terminal of the DC device (26), and at least one negative interconnection point (Nx) coupled to a negative potential terminal of the DC device (26). The electrical converter (10) is configured for converting a DC-link voltage ($V_D$) supplied by the DC device (26) via the DC terminal (12) into a three-phase AC voltage ($v_{AC}$) supplied to the AC device (28) via the AC terminal (14) or vice versa, wherein at least a first positive partial DC-link voltage ($V_{D,px}$) results between the positive interconnection point (Px) and the neutral interconnection point (NP) and at least a first negative partial DC-link voltage ($V_{D,nx}$) results between the neutral interconnection point (NP) and the negative interconnection point (Nx). The method comprises the steps of: determining reference voltages ($v_{a,ref}$, $v_{b,ref}$, $v_{c,ref}$) for the three phases (a, b, c) of the three-phase AC voltage ($v_{AC}$); determining a state-sequence, wherein the state-sequence is a sequence of states of the three phases (a, b, c) to be applied one after the other at the AC terminal (14) such that the reference voltages ($v_{a,ref}$, $v_{b,ref}$, $v_{c,ref}$) are in average generated at the corresponding phases (a, b, c) of the AC terminal (14), wherein the state-sequence is free from any predetermined forbidden states; determining an absolute value of the difference between a sum over all the positive partial DC-link voltages ($V_{D,px}$) and a sum over all the negative partial DC-link voltages ($V_{D,nx}$); determining for each state of the determined state-sequence a corresponding dwell-time ($d_i$) such that the absolute value of the difference is minimized during one switching cycle of the electrical converter (10); generating a switching signal (SWS) for the electrical converter (10) depending on the determined state-sequence such that each state of the determined state-sequence is applied at the AC terminal (14) for the determined corresponding dwell-time ($d_i$); and applying at least a next switching instant to the electrical converter (10) by supplying the switching signal (SWS) to the electrical converter (10).

Fig. 1

**Description**

FIELD OF THE INVENTION

The invention relates to the field of electrical converter control. In particular, the invention relates to a method and a control unit for controlling an electrical converter. The invention also relates to an electrical converter system comprising the electrical converter and the control unit.

BACKGROUND OF THE INVENTION

In particular in medium voltage applications, an electrical converter topology with higher output voltage quality than a 2-level topology is given by the 3-level topology, or by a 5-level topology.

One of the main advantages of the 3- or 5-level topologies are the smaller voltage steps that can be generated at the converter output compared to their 2-level counterpart. The smaller voltage steps lead to a reduced current Total Harmonic Distortion (THD) and accordingly to lower harmonic losses in a machine connected to the converter. Moreover, a smaller amount of overvoltage result at the machine-terminals due to the smaller voltage step-size at the switching instances. Finally, the smaller voltage steps may also reduce the machine-side Common-Mode (CM) voltage.

Such 3-phase, 3- or 5-level converter is typically modulated such that a generation of a desired averaged AC voltage includes nearest Space-Vectors (SVs) to the SV of the AC voltage. This can be achieved by directly employing an SV-based Pulse Width Modulation (PWM) or it is incorporated in the modulation mechanism of a carrier-based PWM. Utilizing the nearest SVs reduces the output voltage ripple and hence also leads to a lower output current ripple, which lowers the losses in an AC device, e.g. an electric machine like an electric motor or a generator, connected to the electrical converter for instance. Furthermore, modulation schemes with a minimum number of switching actions within one switching cycle of all three phases can be realized based on nearest SV, reducing the switching losses of the electrical converter. And finally, employing nearest SVs may avoid direct transitions of a phase output voltage from the negative to the positive DC-link rail voltage and vice versa, which reduces a common-mode voltage step size at the output of the electrical converter.

However, modulating with nearest SVs generates a voltage swing in partial DC-link voltages $V_{D,px}$ and $V_{D,nx}$ at a DC-link of the electrical converter with a major harmonic component at three times of an AC frequency $f_{AC}$ of the electrical converter. A peak-value of this voltage swing depends in steady-state on an AC current of the electrical converter, i.e., an AC current amplitude and/or the AC frequency of the AC current, a fundamental phase-shift between the AC voltage and the AC current, a modulation index m which is affected by the DC-link voltages, a capacitance of DC-link capacitors of the DC-link, and an exact nature of a modulation scheme which is used for the modulation.

For given values of the AC current, the fundamental phase-shift between the AC voltage and the AC current, the modulation index m and the capacitance of DC-link capacitors, the peak-value of the voltage swing in the partial DC-link voltages can be controlled to a certain degree by the modulation scheme which is used for the modulation. However, the common denominator of all modulation schemes which employ nearest SVs is that their ability in reducing the peak-value of the mentioned voltage swing gets very limited (practical towards zero) for a modulation index m --7 $2/\sqrt{3}$ = 1.15.

In addition, abnormal operation conditions of the electrical converter system such as e.g., a 3-phase asymmetry for a grid-side converter also may impact the peak-value of the partial DC-link voltage swing.

To boost the power density of the converter, m = $2/\sqrt{3}$ as well as minimal capacitance values of the partial DC-link capacitors are targeted. This combination may lead, for given operating condition of the electrical converter, to a peak value of the swing in the partial DC-link voltages which is significant. The significant swing in the partial DC-link voltages directly translates to a significant swing in the neutral-point voltage $V_{NP}$, i.e.,

$$V_{NP} = \left(\sum_{x=1}^{L}(V_{D,nx} - V_{D,px})\right)/2,$$

where L is the number of voltage levels minus one divided by two (i.e., L = (number of voltage levels - 1)/2, e.g., L = 1 for a three-level inverter and L = 2 for a five-level inverter).

The peak-value of the swing in $V_{NP}$ cannot take arbitrary high values and typically needs to be limited to e.g., 50V for $V_D$ = 800V, to reliably operate the electrical converter within its specifications. The reasons are the following:

- For a high peak-value of the $V_{NP}$-swing, a maximum blocking voltage of power semiconductors of the electrical converter may be exceeded. This should be avoided to prevent destruction of the power semiconductors by overvoltage.

- An increasing peak-value of the swing in the neutral point voltage generates through the modulation process baseband harmonics (referred to the AC frequency) in the AC current, especially spectral components with a significant amplitude result at 5 and 7 times the AC frequency. These additional harmonics in the AC current lead to higher losses in e.g., the AC device connected to the AC terminal.

- In connection with the just mentioned point, a too high peak value of the $V_{NP}$-swing may prevent the control system of the converter to perform correctly, which may lead to a trip of the electrical converter system.

For certain modulation schemes, an effective reduction of the peak-value of the $V_{NP}$-swing can be achieved for a modulation index m < 1. This would potentially allow to reduce the capacitances $C_{px}$ and $C_{nx}$ of the DC-link capacitors while still complying to $|V_{NP}| < 50V$. However, as mentioned above, for m > 1, the ability to diminish the peak-value of the NP-voltage swing gets smaller and smaller with increasing modulation index and hence $|V_{NP}| > 50V$ may results with the reduced values of the DC-link capacitances. To fulfill $|V_{NP}| < 50V$, the DC-link capacitance values would need to be augmented again.

DESCRIPTION OF THE INVENTION

It is an objective of the invention to provide a method and a control unit for controlling an electrical converter which may contribute to effectively reduce a peak-value of a $V_{NP}$-swing, in particular for a modulation index m > 1. It is another objective of the present invention to provide an electrical converter system comprising the electrical converter and a control unit carrying out the method.

These objectives are achieved by the subject-matter of the independent claims. Further exemplary embodiments are evident from the dependent claims and the following description.

An aspect of the invention relates to a method for controlling an electrical converter. The electrical converter comprises a DC terminal coupled to a DC device, an AC terminal coupled to an AC device, and a DC-link having a neutral interconnection point providing a neutral point voltage, at least one positive interconnection point coupled to a positive potential terminal of the DC device, and at least one negative interconnection point coupled to a negative potential terminal of the DC device. The electrical converter is configured for converting a DC voltage supplied by the DC device via the DC terminal into a three-phase AC voltage supplied to the AC device via the AC terminal or vice versa, wherein at least a first positive partial DC-link voltage results between the positive interconnection point and the neutral interconnection point and at least a first negative partial DC-link voltage results between the neutral interconnection point and the negative interconnection point. The method comprises the steps of: determining reference voltages for the three phases of the three-phase AC voltage; determining at least one forbidden state of the three phases of the three-phase AC voltage; determining a state-sequence, wherein the state-sequence is a sequence of states of the three phases to be applied one after the other at the AC terminal such that the reference voltages are in average generated at the corresponding phases of the AC terminal, wherein the state-sequence is free from the forbidden states; determining an absolute value of the difference between a sum over all the positive partial DC-link voltages and a sum over all the negative partial DC-link voltages; determining for each state of the determined state-sequence a corresponding dwell-time such that the absolute value of the difference is minimized during one switching cycle of the electrical converter; generating a switching signal for the electrical converter depending on the determined state-sequence such that each state of the determined state-sequence is applied at the AC terminal for the determined corresponding dwell-time; and applying at least a next switching instant to the electrical converter by supplying the switching signal to the electrical converter.

The electrical converter may be a three-level converter or a five-level converter. The DC device may be a DC energy source. The AC device may be an AC load, e.g., an AC machine or an AC motor. That the electrical converter is configured for "... or vice versa" means that the electrical converter may also be configured for converting a three-phase AC voltage supplied by the AC device via the AC terminal into a DC voltage supplied to the DC device via the DC terminal. In this case, the DC device may be a DC load, e.g., a battery, and the AC device may be an AC energy source, e.g. a generator.

The positive interconnection point may be coupled to the neutral point by a first positive DC-link capacitor. The positive interconnection point may be referred to as first positive interconnection point in this context. The negative interconnection point may be coupled to the neutral point by a first negative DC-link capacitor. The negative interconnection point may be referred to as first negative interconnection point in this context. The DC-link may comprise a second positive interconnection point coupled to the first positive interconnection point by a second positive DC-link capacitor and a second negative interconnection point coupled to the first negative interconnection point by a second negative DC-link capacitor.

The terms "positive" and "negative" in conjunction with the interconnection points and the DC-link capacitors exclusively refer to the positions of the interconnection points and, respectively, the DC-link capacitors within the DC-link. In particular, the interconnection points and the DC-link capacitor(s) arranged electrically between the neutral point and the positive potential terminal of the DC device may be referred to as "positive" interconnection points and DC-link capacitor(s), respectively, and the interconnection points and the DC-link capacitor(s) arranged electrically between the neutral point and the negative potential terminal of the DC device may be referred to as "negative" interconnection points and DC-link capacitor(s), respectively.

A number of the partial DC-link voltages may correspond to the number of the DC-link capacitors. In this description, the terms "positive" and "negative" in conjunction with the partial DC-link voltages refer to the positions of the corresponding the DC-link capacitors within the DC-link only. In particular, the "positive" partial DC-link voltages refer to the voltages across the corresponding positive DC-link capacitors and the "negative" partial DC-link voltages refer to the voltages across the corresponding negative DC-link capacitors. However, in reality, during a normal operation of the electrical converter, the positive partial DC-link voltages are in fact positive voltages, but the negative partial DC-link voltages are in fact positive voltages.

The reference voltages for the three phases of the three-phase AC voltage may be determined with respect to the abc-frame. These reference voltages in the abc-frame may be determined by reading the reference voltages from a memory, e.g., from the memory of the control unit, and/or by receiving the reference voltages from an external device, e.g., from a controller of the load.

The states may be referred to as "switching states". The state-sequence is a sequence of states which are to be applied one after the other for the corresponding dwell-time in order to achieve in average the reference voltages. That the state-sequence is free from the forbidden states means that all available states may be used for determining the state-sequence except for the forbidden states. In other words, all states available for determining the state-sequence form a group of states and this group does not comprise, in other words is free from, the forbidden states. In addition, the requirement that the state-sequence is free from the forbidden states may mean that all determined state-sequences over a predetermined duration are free from the forbidden state. The predetermined duration may last from several micro-seconds to the lifetime of the electrical converter. Alternatively, the requirement that the state-sequence is free from the forbidden states may mean that the state-sequence is always free from the forbidden states when a modulation index m fulfills a predetermined condition.

The period during which the states of one state-sequence are applied may be referred to as one switching cycle. For a next switching cycle, the same state-sequence or another state-sequence may be used.

A state is characterized such that each phase at the AC terminal is connected either to an interconnection point Px, Ny, or NP. In general, x and y may be natural numbers between one and L. In order that a state is classified as a forbidden state, the following two conditions need to be fulfilled:

1) the partial DC-link capacitors $C_{px}$, $C_{nx}$ are loaded unequally from the AC side with phase currents $I_a$, $I_b$, $I_c$ when applying this state; and
2) there is no alternative state to the forbidden state which leads to the same current forming phase output voltage.

Condition 1) may reflect to the case where the positive DC-link capacitor $C_{px}$ is loaded by the negative phase a current $-I_a$ and the negative DC-link capacitor $C_{nx}$ is loaded by the phase c current $I_c$. In this case and due to the fact that the sum of the phase currents is zero, typically $-I_a \neq I_c$ results. This means that the positive and negative DC-link capacitors $C_{px}$, $C_{nx}$ are charged/discharge unequally. This leads to an increased magnitude of the NP-voltage. Due to condition 2), this state needs to be utilized when employing nearest SVs, and hence equalizing the positive and negative partial DC-link voltages $V_{D,px}$ and $V_{D,nx}$, respectively, or in other words minimizing the amplitude of the NP-voltage, becomes more challenging or even impossible, especially for higher modulation degrees. For this reason, such states should be avoided and should not be used for operating the electrical converter. Therefore, these states are referred to as forbidden states. According to an embodiment, each of the forbidden states is characterized by a set of the interconnection points PL, Q, and NL to which respective ones of the three phases a, b, c are connected in the corresponding state, where the interconnection point Q is one of the union

$$\mathrm{NP} \wedge \mathrm{N}(\mathrm{L}-j) \wedge \mathrm{P}(\mathrm{L}-j) \ \text{with } j = \begin{cases} \text{empty,} & \text{for } L-1 < 1 \\ 1...L-1, & \text{for } L-1 \geq 1 \end{cases},$$

where L is equal to the number of voltage levels minus one divided by two (i.e., L = (number of voltage levels -1)/2), and where in case of j being "empty" the corresponding connection point does not exist, and where the forbidden states are sets comprising permutations of the interconnection points PL, NL, Q).

For example, in case of the three-level converter, L is 1, Q = NP = 0, and there may be six forbidden states, i.e., [P1,0,N1], [P1,N1,0], [N1,0,P1], [N1,P1,0], [0,P1,N1], and [0,N1,P1], wherein the commas are inserted for clarity reasons only and wherein the capital letters "N" and "P" correspond to the small letter "n" and "p", respectively. The remaining 21 states (27 - 6 = 21) may belong to the non-forbidden states and may be used for the state-sequence.

In case of the five-level converter, L is 2, Q ∈ {NP, N1, P1}, and the forbidden states may be determined based on the above definition of the forbidden states. In particular, the forbidden states in this case are sets comprising the permutations of the interconnection points P2, N2, NP, the permutations of the interconnection points P2, N1, N2, and permutations of the interconnection points P1, P2, N2.

According to an embodiment, the predetermined forbidden states of the three phases a, b, c of the three-phase AC voltage are determined in advance, i.e., before carrying out the method for operating the electrical converter, e.g., by a manufacturer or a programmer of the control unit. Then, the forbidden states may be stored on the memory of the control unit. Alternatively, after determining the forbidden states, a set of all non-forbidden states may be determined, and the non-forbidden states may be stored on the memory of the controller. Then, when carrying out the method for operating the electrical converter the processer may choose any of the non-forbidden states for the state-sequences for operating the electrical converter, e.g., based on the exemplary modulation schemes described below, and thereby automatically avoid using the forbidden states for the state-sequences.

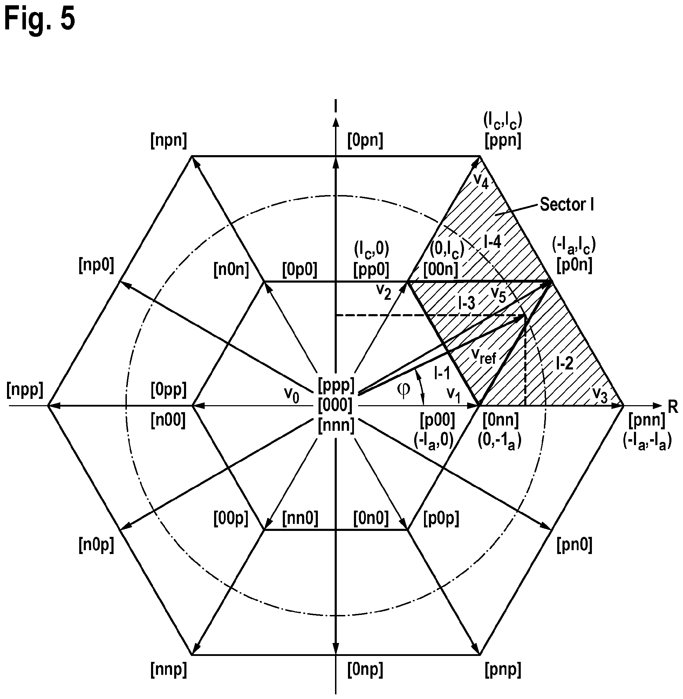

According to an embodiment, each of the states is realized by a corresponding space-vector, the reference voltages are represented by a reference voltage space-vector, a space-vector sequence is determined depending on the determined state-sequence, wherein the space-vector sequence is a sequence of the space-vectors to be applied one after the other at the AC terminal such that the reference space-vector is in average at least approximately represented by the space-vector sequence, and the switching signal is determined depending on the determined state-sequence such that each state of the determined state-sequence is applied at the AC terminal for the determined corresponding dwell-time by determining the switching signal depending on the determined space-vector sequence such that each space-vector of the determined space-vector sequence is applied at the AC terminal for the dwell-time of the corresponding state. The reference space-vector may be determined in the $\alpha\beta0$-frame from the reference voltages in the abc-frame. The space-vectors associated to the forbidden states are excluded from the state-sequence, e.g., a space-vector $v_5$ may be excluded (see figure 5). In general, the forbidden states may correspond to one or more zero common-mode voltage space-vectors.

For a 3-level converter, a first and second combination of the states in sector I of the $\alpha\beta0$-frame for the state-sequence may be:

- [p00], [Onn], [pnn], and [ppn] for $0 \leq \varphi < 30°$; and/or, respectively,
- [pp0], [00n], [pnn], and [ppn] for $30° \leq \varphi < 60°$.

A corresponding first and second combination of the space-vectors in sector I of the $\alpha\beta0$-frame for the corresponding space-vector sequence for realizing the state-sequence may be:

- $v_{1,1}$, $v_{1,2}$, $v_3$, and $v_4$ for $0 \leq \varphi < 30°$; and/or, respectively,
- $v_{2,1}$, $v_{2,2}$, $v_3$, and $v_4$ for $30° \leq \varphi < 60°$.

where $v_{1,1}$ corresponds to [p00], $v_{1,2}$ to [Onn], $v_{2,1}$ to [pp0] and $v_{2,2}$ to [00n].

The first and second combinations of the states may be used for a first state-sequence and, respectively, a second state-sequence and may be a part a first modulation scheme. The first modulation scheme may be applied to the electrical converter. The corresponding state-sequences may be, for example:

- [pnn] → [Onn] → [p00] → [ppn] → [p00] → [0nn] → [pnn], or
- [Onn] → [pnn] → [p00] → [ppn] → [p00] → [pnn] → [Onn] for $0 \leq \varphi < 30°$ (referred to as the first state-sequence);

and/or, respectively,

- [ppn] → [pp0] → [00n] → [pnn] → [00n] → [pp0] → [ppn], or
- [pnn] → [00n] → [ppn] → [pp0] → [ppn] → [00n] → [pnn] for $30° \leq \varphi < 60°$ (referred to as the second state-sequence).

The first and second combinations of the space-vectors may be used for a first space-vector sequence and a second space-vector sequence, respectively, and may be a part the first modulation scheme. The first modulation scheme may be applied to the electrical converter.

The corresponding space-vector sequences may be, for example:

- $v_3 \rightarrow v_{1,2} \rightarrow v_{1,1} \rightarrow v_4 \rightarrow v_{1,1} \rightarrow v_{1,2} \rightarrow v_3$, or
- $v_{1,2} \rightarrow v_3 \rightarrow v_{1,1} \rightarrow v_4 \rightarrow v_{1,1} \rightarrow v_3 \rightarrow v_{1,2}$ for $0 \leq \varphi < 30°$ (referred to as the first space-vector sequence);

and/or, respectively,

- $v_4 \rightarrow v_{2,1} \rightarrow v_{2,2} \rightarrow v_3 \rightarrow v_{2,2} \rightarrow v_{2,1} \rightarrow v_4$, or

- $v_3 \rightarrow v_{2,2} \rightarrow v_4 \rightarrow v_{2,1} \rightarrow v_4 \rightarrow v_{2,2} \rightarrow v_3$ for $30° \leq \varphi < 60°$ (referred to as the second space-vector sequence).

The first modulation scheme is very effective in reducing the peak-value of the NP-voltage swing to a minimum, in particular because direct transitions of a phase output voltage from the negative to the positive DC-link rail voltage and vice versa are avoided with this sequencing. However, a number of switching actions of all phases is increased from typically 6 (each phase is switched twice in a switching cycle) to 12 (each phase is switched 4 times within a switching cycle) or, respectively, 10 (one phase is switched 2 and two phases are switched 4 times within a switching cycle) when using the first modulation scheme. This may increase switching losses of the electrical converter.

To avoid the potential increase of the switching losses when using the first modulation scheme, a second modulation scheme for effective NP-voltage ripple suppression, e.g., without the zero common-mode voltage space-vector(s), may be derived. In particular, to impact the peak-value of the partial DC-link voltage swing, the second modulation scheme may comprise two different combinations of states in sector I, each without the forbidden states:

- [p00], [pp0], [pnn] and [ppn] (for a third state-sequence); and/or
- [Onn], [00n], [pnn] and [ppn] (for a fourth state-sequence);

Corresponding third and fourth space-vector combinations, each without the zero common-mode voltage space-vector, may be:

- $v_{1,1}$, $v_{2,1}$, $v_3$ and $v_4$ (for a third space-vector sequence); and/or
- $v_{1,2}$, $v_{2,2}$, $v_3$ and $v_4$ (for a fourth space-vector sequence);

wherein whether the third or fourth space-vector sequence is applied may depend on a current operating condition. In particular, it may be determined depending on the sign of $V_{D,p1} - V_{D,n1}$, the dwell-times of the corresponding space-vectors and the output currents whether the third or the fourth space-vector sequence may be used. For example in case $V_{D,p1} > V_{D,n1}$ and $-d_{1,q} \cdot I_a + d_{2,q} \cdot I_c > 0$, where $d_{1,q}$ and $d_{2,q}$ are the dwell-times associated to $v_{1,q}$ and $v_{2,q}$ ($q = 1$ or $2$), respectively, the fourth space-vector sequence may be chosen. And in the other cases, the third space-vector sequence may be chosen. The corresponding state-sequences may be

- [pnn] $\rightarrow$ [ppn] $\rightarrow$ [pp0] $\rightarrow$ [p00] $\rightarrow$ [pp0] $\rightarrow$ [ppn] $\rightarrow$ [pnn], or

- [p00] $\rightarrow$ [pp0] $\rightarrow$ [ppn] $\rightarrow$ [pnn] $\rightarrow$ [ppn] $\rightarrow$ [pp0] $\rightarrow$ [p00] (the third space-vector sequence);

- [ppn] $\rightarrow$ [pnn] $\rightarrow$ [0nn] $\rightarrow$ [00n] $\rightarrow$ [0nn] $\rightarrow$ [pnn] $\rightarrow$ [ppn], or

- [00n] $\rightarrow$ [0nn] $\rightarrow$ [pnn] $\rightarrow$ [ppn] $\rightarrow$ [pnn] $\rightarrow$ [0nn] $\rightarrow$ [00n] (the fourth space-vector sequence).

and the associated space-vector sequences may be:

- $v_3 \rightarrow v_4 \rightarrow v_{2,1} \rightarrow v_{1,1} \rightarrow v_{2,1} \rightarrow v_4 \rightarrow v_3$, or
- $v_{1,1} \rightarrow v_{2,1} \rightarrow v_4 \rightarrow v_3 \rightarrow v_4 \rightarrow v_{2,1} \rightarrow v_{1,1}$ (the third space-vector sequence);
- $v_4 \rightarrow v_3 \rightarrow v_{1,2} \rightarrow v_{2,2} \rightarrow v_{1,2} \rightarrow v_3 \rightarrow v_4$, or
- $v_{2,2} \rightarrow v_{1,2} \rightarrow v_3 \rightarrow v_4 \rightarrow v_3 \rightarrow v_{1,2} \rightarrow v_{2,2}$ (the fourth space-vector sequence).

According to an embodiment, the method comprises receiving at least a reference value to be achieved at the AC terminal wherein the reference voltages are determined depending on the received reference value.

According to an embodiment, the load is an electric motor, the reference value is a torque value of a torque to be generated by the electric motor; or the reference value is a speed value of a speed to be achieved by the electric motor. The speed to be achieved by the electric motor is a rotational speed of the electric motor.

According to an embodiment, the method comprises determining reference voltages in the dq-frame from the reference value, wherein the reference voltages in the dq-frame correspond to the voltages to be applied, in average, to the AC terminal and wherein the reference voltages in the abc-frame are determined depending on the received reference value by determining the reference voltages in the abc-frame depending on the reference voltages in the dq-frame. The voltages to be applied, in average, to the AC terminal may be determined from the reference voltages in the dq-frame by an inverse Park transformation.

According to an embodiment, a modulation index m is determined from the reference voltages in the dq-frame, and the forbidden states and the state-sequence without the forbidden states are determined only when the modulation index m is larger than 2/3. When m is 2/3 or smaller than 2/3, a conventional state-sequence comprising a combination of all available states may be used. That the modulation index m is larger than 2/3 may be the predetermined condition which triggers the modulation without the forbidden states, e.g., without the corresponding space-vectors, as mentioned above.

According to an embodiment, the state-sequence is determined such that the absolute value of the difference is minimized. For example, the state-sequence may be determined such that the absolute value of the difference is minimized by determining the corresponding space-vector sequence such that the absolute value of the difference is minimized.

According to an embodiment, the states of the determined state-sequence are applied for the determined corresponding dwell-time only when the modulation index m is larger than $4/3 \cdot \sqrt{3}$. When the modulation index m is $4/3 \cdot \sqrt{3}$ or smaller than $4/3 \cdot \sqrt{3}$, a conventional state-sequence comprising conventionally determined dwell-times may be used. That the modulation index m is larger than $4/3 \cdot \sqrt{3}$ may be the predetermined condition which triggers the modulation without the forbidden states, e.g., without the corresponding space-vector(s), as mentioned above. This approach may be used when using the first modulation scheme.

According to an embodiment, the state-sequence is determined such that the number of switching actions of the three-phase AC voltages is minimized while the state-sequence is applied to the electrical converter. In this case, the second modulation scheme may be applied to the electrical converter.

An aspect relates the control unit for controlling the electrical converter. The control unit comprises: a memory for storing at least one state-sequence comprising one or more states, in particular switching states; and a processor communicatively coupled to the memory and being configured to carry out the method as described above and in the following.

An aspect relates to an electrical converter system. The electrical converter system comprises: the electrical converter and the control unit.

A computer program for controlling the electrical converter may be provided. The computer program may be configured to carry out the steps of the above method, when being executed by the processor of the control unit. The computer program may be stored on a computer-readable medium.

In general, it has to be understood that features of the method as described in the above and in the following may be features of the control unit, the electrical converter system, the computer program, and the computer-readable medium as described in the above and in the following, and vice versa.

These and other aspects of the invention will be apparent from and elucidated with reference to the embodiments described hereinafter.

BRIEF DESCRIPTION OF THE DRAWINGS

The subject-matter of the invention will be explained in more detail in the following text with reference to exemplary embodiments which are illustrated in the attached drawings.

Fig. 1 shows a schematic circuit diagram of an electrical converter, according to an embodiment of the invention.

Fig. 2 shows a schematic circuit diagram of an electrical converter, according to an embodiment of the invention.

Fig. 3 shows a schematic block diagram of an electrical converter system comprising a control unit and the electrical converter of figures 1 or 2, according to an embodiment of the invention.

Fig. 4 shows a schematic signal flow diagram of a controller of the control unit of the electrical converter system of figure 3, according to an embodiment of the invention.

Fig. 5 shows an example of a space vector (SV) diagram of a 3-level, 3-phase converter for equal partial DC-link voltages in the complex plain.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

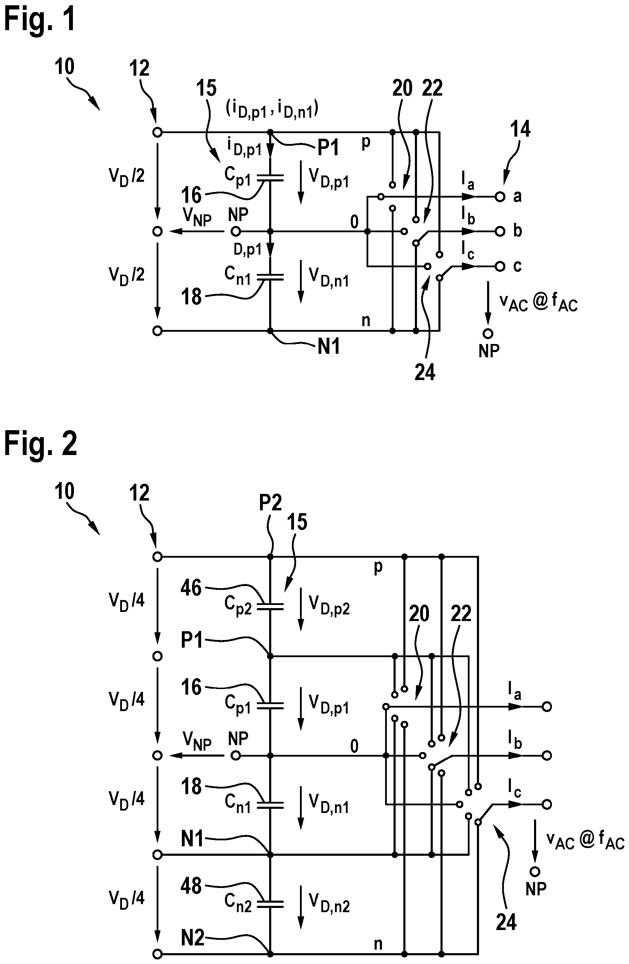

Fig. 1 shows a schematic circuit diagram of an electrical converter 10. The electrical converter 10 has a DC terminal 12 and an AC terminal 14.

The DC terminal 12 comprises a positive input connected to a positive DC-link rail p, a negative input connected to a negative DC-link rail n and potentially a neutral input. The positive DC-link rail p of the electrical converter 10 is connected to a positive potential terminal of a DC device 26 (see figure 2) and the negative DC-link rail n of the electrical converter 10 is connected to a negative potential terminal of the DC device 26.

A first positive DC-link capacitor 16 and a first negative DC-link capacitor 18 of the electrical converter 10 may be connected between these DC-link rails p, n. The first DC-link capacitor 16 is arranged between the positive DC-link rail p and the neutral point NP and the second DC-link capacitor 18 is arranged between the negative DC-link rail n and the neutral point NP. The first positive DC-link capacitor 16 has a first positive capacitance value $C_{p1}$. The first negative DC-link capacitor 18 has a capacitance value $C_{n1}$. The DC terminal 12 may be coupled to a DC device 26 (see figure 2).

The electrical converter 10 comprises a neutral interconnection point NP, at least one positive interconnection point PL and at least one negative interconnection point NL. In general, L may be a natural number between one and a number of available voltage levels of the electrical converter 10 minus one, divided by two ((number of voltage levels - 1) / 2). In case of the electrical converter 10 being the three-level converter of figure 1, three voltage levels are possible and L is 1. So, in case of the three-level converter 10 of figure 1, the electrical converter 10 comprises a first positive interconnection point P1 and a negative interconnection point N1 only. In case of the electrical converter 10 being a five-level converter, as shown in figure 2, five voltage levels are possible and L is 2.

The terms "positive" and "negative" describing the above introduced interconnection points PL, NL and DC-link capacitors 16, 18 do not refer to an electrical potential or charge of the corresponding interconnection points PL, NL or DC-link capacitors 16, 18, respectively, but to the position of the corresponding interconnection points PL, NL and capacitors 16, 18 within the DC-link 15, respectively. In particular, in the figures the positive interconnection point(s) PL and the positive DC-link capacitor(s) 16 are arranged above the neutral interconnection point NP and the negative interconnection point(s) NL and the negative DC-link capacitor(s) 18 are arranged below the neutral interconnection point NP.

In the same way, the terms "positive" and "negative" describing the above introduced capacitance values $C_{p1}$, $C_{n1}$ do not refer to a sign of the capacitance values $C_{p1}$, $C_{n1}$ but to the position of the corresponding capacitors 16, 18 within the DC-link 15.

Ideally, a half DC-voltage $V_D/2$ results between the positive input and the neutral input and another half DC-voltage $V_D/2$ results between the neutral input and the negative input. A first positive partial DC-link voltage $V_{D,p1}$ results between the positive DC-link rail p and the neutral point NP, and a first negative partial DC-link voltage $V_{D,nx}$ results between the neutral point NP and the negative DC-link rail n. A neutral point voltage $V_{NP}$ may result between the neutral point NP and the neutral input. A first positive current $i_{D,p1}$ may flow into the first DC-link capacitor 16. A first negative current $i_{D,n1}$ may flow into the second DC-link capacitor 18.

The terms "positive" and "negative" in conjunction with the partial DC-link voltages $V_{D,p1}$, $V_{D,n1}$ refer to the positions of the corresponding the DC-link capacitors 16, 18 within the DC-link only. In particular, the "positive" partial DC-link voltages $V_{D,px}$ refer to the voltages across the corresponding positive DC-link capacitors 16, 46 (see figure 2) and the "negative" partial DC-link voltages $V_{D,nx}$ refer to the voltages across the corresponding negative DC-link capacitors 18, 48 (see figure 2). However, in reality, during a normal operation of the electrical converter 10, the positive partial DC-link voltages $V_{D,px}$ are in fact positive voltages, but the negative partial DC-link voltages $V_{D,nx}$ are in fact positive voltages. Accordingly, the terms "positive" and "negative" in conjunction with the first currents $i_{D,p1}$, $i_{D,n1}$ refer to the positions within the DC-link 15 at which the corresponding first currents $i_{D,p1}$, $i_{D,n1}$ are measured only. In particular, the first "positive" current $i_{D,p1}$ may be measured at the first positive interconnection point P1 and the first "negative" current $i_{D,p1}$ may be measured at the neutral interconnection point NP. However, in the reality, during a normal operation of the electrical converter 10, the currents $i_{D,px}$, $i_{D,nx}$ may be positive or negative currents with respect to a positive direction in which the corresponding currents flow.

The AC terminal 14 provides three-phase currents $I_a$, $I_b$, $I_c$ of corresponding phases a, b and c. An AC voltage $v_{AC}$ at an AC frequency $f_{AC}$ results at the AC terminal 14. The AC terminal 14 may be connected to an AC device 28 (see figure 2).

The electrical converter 10 may be a 3-level inverter or rectifier and/or may comprise three switches 20, 22 and 24 for selectively connecting the respective phase a, b, c with the first positive interconnection point P1, the first negative interconnection point N1, or the neutral point NP. The switches 20, 22, 24 each may be or may have at least one of a semiconductor switch, such as an Insulated-Gate Bipolar Transistor (IGBTs) or Metal Oxide Semiconductor Field-Effect Transistor (MOSFETs).

Fig. 2 shows a schematic circuit diagram of an electrical converter 10, according to an embodiment of the invention. The electrical converter 10 shown in figure 2 may widely correspond to the electrical converter 10 described with respect to figure 1. Therefore, in order to provide a concise description of the present invention, only those features of the electrical converter 10 of figure 2 are described in the following in which the electrical converter 10 of figure 2 differs from the electrical converter 10 described with respect to figure 1.

The electrical converter 10 is a 5-level-converter and as such comprises 5 voltage levels. Therefore, L is 2. Thus, the electrical converter 10 comprises a second positive interconnection point P2 and a second negative interconnection point N2. In addition, the electrical converter 10 comprises a second positive DC-link capacitor 46 between the first and second positive interconnection points P1, P2, and a second negative DC-link capacitor 48 between the first and second negative interconnection points N1, N2. The second positive DC-link capacitor 46 has a second positive capacitance value

$C_{p2}$. The second negative DC-link capacitor 48 has a second negative capacitance value $C_{n2}$. In this context, the terms "positive" and "negative" again do not refer to the sign of the corresponding value but to the position of the corresponding capacitor 46, 48 within the DC-link 15, i.e., in figure 5 above the neutral interconnection point NP and, respectively, below the neutral interconnection point NP.

Ideally, a quarter DC-voltage $V_D/4$ results between the second and first positive interconnection points P2, P1, another quarter DC-voltage $V_D/4$ results between the first positive interconnection point P1 and the neutral interconnection point NP, another quarter DC-voltage $V_D/4$ results between the neutral interconnection point NP and the first negative interconnection point N1, and another quarter DC-voltage $V_D/4$ results between the first and second negative interconnection points N1, N2. A second positive partial DC-link voltage $V_{D,p2}$ results between the second and first positive interconnection points P2, P1, and a second negative partial DC-link voltage $V_{D,n2}$ results between the first and second negative interconnection points N1, N2. In this context, the terms "positive" and "negative" again do not refer to the sign of the corresponding voltage but to the position of the corresponding capacitor 46, 48 within the DC-link 15, as explained above.

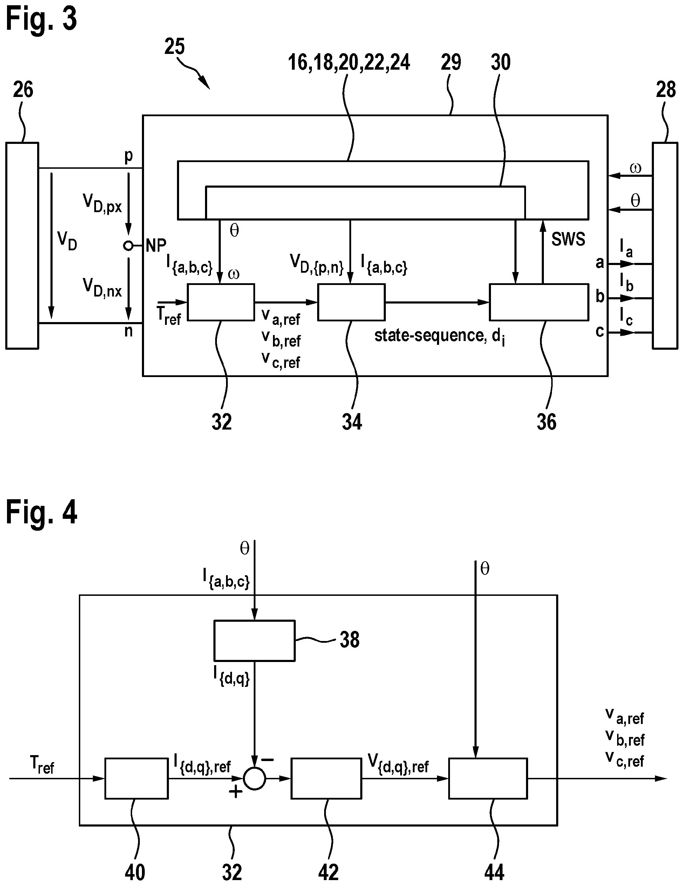

Fig. 3 shows a schematic block diagram of an electrical converter system 25 comprising a control unit 29 and the electrical converter 10 of figures 1 or 2, according to an embodiment of the invention. The control unit 29 is configured to control the converter 10. The control unit 29 comprises a sensor arrangement 30, a controller 32, a modulator 34, and a switching signal generator 36.

The sensor arrangement 30 for determining one or more parameter values of one or more parameters, e.g., of the three-phase currents $I_a$, $I_b$, $I_c$, the partial DC-link voltages $V_{D,px}$, $V_{D,nx}$ and/or an overall DC-link voltage $V_D$. To this end, the sensor arrangement 30 may comprise one or more sensors, e.g., current and/or voltage sensors (not shown). The three-phase currents $I_a$, $I_b$, $I_c$ may be presented as phase currents $I_{\{a,b,c\}}$ in the abc-frame.

The DC device 26 may be a DC energy source, e.g., a battery or a photovoltaic installation, or a DC load, e.g., a DC motor. The AC device 28 may be an AC energy source, e.g., an electrical grid or a generator, or an AC load, e.g., an AC motor. The AC device 28 may be a rotating electrical machine, e.g., the AC motor or the AC generator. In case of the AC device 28 being a rotating electrical machine, a resolver or an absolute encoder (not shown) for determining a measured angular speed $\omega$, in other words for measuring the angular speed $\omega$, which may be referred to as measured angular speed $\omega$ in the following, of the rotating electrical machine may be coupled to the AC device 28. In addition, in this case, a sensor for determining an angle $\theta$, in other words for measuring the angle $\theta$, which may be referred to as measured angle $\theta$ in the following, may be coupled to the AC device 28. The measured angle $\theta$ may be the angle between a phase axis in the $\alpha\beta0$-frame and a resulting axis of a permanent magnet of the AC device 28, e.g., measured counter-clockwise, wherein a positive direction of an axis of the permanent magnet may point to the magnetic north pole.

The controller 32 may be configured for determining reference voltages $v_{a,ref}$, $v_{b,ref}$, $v_{c,ref}$ from a reference value, e.g., from a torque reference $T_{ref}$ or from an angular speed reference $\omega_{ref}$, from the angle $\theta$, and from the phase currents $I_{\{a,b,c\}}$ in the abc-frame, as explained with respect to figure 3 below. In another embodiment, the angular speed $\omega$ of the AC device 28 may be controlled to the angular speed reference $\omega_{ref}$. In this case, the torque reference $T_{ref}$ may be generated as an output of a corresponding speed controller.

The modulator 34 may be configured for executing a modulation by generating a sequence of states, i.e., a state-sequence, from the reference voltages $v_{a,ref}$, $v_{b,ref}$, and $v_{c,ref}$, the partial DC-link voltage $V_{D,\{p,n\}}$, and the phase currents $I_{\{a,b,c\}}$. In particular, the modulator 34 may be configured for determining a state-sequence, wherein the state-sequence is a sequence of states of the three phases a, b, c to be applied one after the other at the AC terminal 14 such that the reference voltages $v_{a,ref}$, $v_{b,ref}$, $v_{c,ref}$ in the abc-frame are in average generated at the corresponding phases a, b, c of the AC terminal 14, wherein the state-sequence is free from any predetermined forbidden states. Then, an absolute value of the difference between a sum over all the positive partial DC-link voltages $V_{D,px}$ and a sum over all the negative partial DC-link voltages $V_{D,nx}$ may be determined. For each state of the determined state-sequence a corresponding dwell-time $d_i$ may be determined such that the absolute value of the difference is minimized during one switching cycle of the electrical converter 10. Afterwards, a switching signal SWS for the electrical converter 10 may be generated depending on the determined state-sequence such that each state of the determined state-sequence is applied at the AC terminal 14 for the determined corresponding dwell-time $d_i$.

The forbidden states may be predetermined in advance, i.e., before carrying out the method for controlling the electrical converter 10. The forbidden states are characterized by the fulfillment of the following two conditions:

    1) the partial DC-link capacitors $C_{px}$, $C_{nx}$ are loaded unequally from the AC side with phase currents $I_a$, $I_b$, $I_c$ when applying this state; and
    2) there is no alternative state to the forbidden state which leads to the same current forming phase output voltage.

The dwell-times $d_i$ are associated with space-vectors $v_i$ of a space-vector sequence as described in a first modulation scheme and/or a second modulation scheme, e.g., as elaborated above. The partial DC-link voltages $V_{D,\{px,nx\}}$ may be used as voltage information at a first point in time and the phase currents $I_{\{a,b,c\}}$ may be used for determining the voltage information at a second point in time after the first point in time. The first point in time and the second point in time may also occur at the same instant. This voltage information may be used by the modulator 34 as it is known in the state-of-the-art.

The switching signal generator 36 may produce a switching signal SWS comprising switching commands based on these outputs from the modulator 34 and the states or, in case, space-vectors defined for the modulation schemes, while incorporating timing limitations of the switches 20, 22, 24 such as an interlocking time and a minimal on/off time of the switches 20, 22, 24. The switching signal SWS, in particular the switching commands, then may be translated into gate voltages which steer the switches 20, 22, 24 as it is known in the state-of-the-art. In this process, the desired AC voltage $v_{AC}$ may be in average applied at the three phases a, b, c of the AC terminal 14 in the sense of a symmetrical, sinusoidal 3-phase voltage system, e.g., the three phase voltages have the same amplitudes and the phase-shift between the voltage of phase a and the voltages of phase b and phase c are 120° and 240° electric, respectively, referred to the AC frequency.

Fig. 4 shows a schematic signal flow diagram of the controller 32 of the control unit 29 of the electrical converter system 25 of figure 3, according to an embodiment of the invention. The controller 32 comprises a transformation block 38, a Maximum-Torque-Per-Ampere (MTPA) 40 or similar algorithm, a current controller 42, and an inverse Park-transformation block 44.

The transformation block 38 may be configured for determining actual dq-currents, e.g., dq-currents $I_{\{d,q\}}$ in the dq-frame, from the measured three-phase motor phase currents $I_{\{a,b,c\}}$, by employing a Park-transformation with the measured angle θ, for example.

The MTPA 40 may be configured for determining reference currents, e.g., as reference currents $I_{\{d,q\},ref}$ in the dq-frame, in particular in a rotor-oriented dq-coordinate system, from the reference value, in particular from the torque reference $T_{ref}$. The reference currents $I_{\{d,q\},ref}$ in the dq-frame may then be compared to the actual dq-currents $I_{\{d,q\}}$ in the dq-frame and resulting current errors may be fed into the current controller 42.

The current controller 42 may be configured for generating reference voltages $V_{\{d,q\},ref}$ in the dq-frame from the resulting current errors, as it is known in the state-of-the-art.

The inverse Park-transformation block 44 may determine the reference voltages $v_{a,ref}$, $v_{b,ref}$, $v_{c,ref}$ in the abc-frame to be applied between the three phases a, b, c of the AC terminal 14 of the electrical converter 10 and the neutral point NP from the reference voltages $V_{\{d,q\},ref}$ in the dq-frame by applying an inverse Park transformation.

Fig. 5 shows an example of a space vector (SV) diagram of a 3-level, 3-phase converter for equal partial DC-link voltages in the complex plain. The SV diagram may be used, e.g., by the modulator 34, and/or to provide the appropriate space-vectors $v_i$ for the non-forbidden states. The SV diagram shows space-vectors $v_i$ corresponding to the different switching states [klr], in other words "switching positions", of the electrical converter 10. The forbidden states [klr] are depicted in bolt print in the SV diagram.

The SV diagram shows six sectors each having a 60° angular width, wherein only a first sector I of the six sectors is expressively denoted. The first sector I is confined by a first space-vector $v_1$ and a third space-vector $v_3$ on one side, and by a second space-vector $v_2$ and a fourth space-vector $v_4$ at the other side. A fifth space-vector $v_5$ may correspond to a combination of the third and fourth space-vectors $v_3$, $v_4$, and corresponds to one of the forbidden states, in particular to [p0n]. The first sector I comprises four subsectors, i.e., a first subsector I-1, a second subsector I-2, a third subsector I-3, and a fourth subsector I-4.

The SV diagram has a rotational 60°-symmetry in the complex plain. Therefore, the SV diagram shows 19 distinct space-vectors $v_i$ which correspond to 27 different combinations of the voltages of the phases a, b, c. The 27 different combinations may be realized by the different switching states, or in short "states", of the switches 20, 22, 24 which are indicated in the form of [klr], with k,l,r ∈ [0,PL,NL] which codes the half-bridge voltages of [phase a, phase b, phase c], respectively. The 'PL' thereby means that the corresponding output of the half-bridge is clamped to the corresponding positive interconnection point PL, the 'NL' accordingly indicates a clamping to the corresponding negative interconnection point NL and finally the '0' denotes a connection to the DC-link neutral interconnection point NP.

The first and second space-vectors $v_1$, $v_2$ have alternative realization options. In particular, the first space-vector $v_1$ can be realized by $v_{1,1}$ = [p00] or by $v_{1,2}$ = [0nn] and the second space-vector $v_2$ can be built by $v_{2,1}$ = [pp0] or $v_{2,2}$ = [00n]. Each of the alternative realization options leads to different loading, actually opposite loading, of the first DC-link capacitors 16, 18. The loading is indicated in figure 5 with the nomenclature ($i_{D,p1}$, $i_{D,n1}$) indicating the positive direction of the currents into the first DC-link capacitors 16, 18, wherein the first DC-link capacitor currents $i_{D,p1}$, $i_{D,n1}$ may correspond to the currents $I_a$, $I_b$, or $I_c$ of phases a, b, or c, respectively. Therefore, a peak-value of a partial DC-link voltage swing can be influenced by the choice of the realization options of the space-vectors $v_1$ and $v_2$.

Due to the rotational 60°-symmetry of the 19 distinct SVs achievable with the 3-phase, 3-level electrical converter 10 the following description can be restricted to sector I for equal partial DC-link voltages, i.e., the first partial DC-link voltages $V_{D,p1}$ and $V_{D,n1}$. The conclusion from sector I can be directly mapped to the other sectors of the SV diagram. In particular, once the modulation scheme and the space-vector sequence are determined for sector I, the same modulation scheme may be applied for the other sectors of the SV diagram. To find the space-vector sequences of the space-vectors $v_i$ for the other sectors, the hexagon with the 19 distinct space-vectors $v_i$ of figure 4 and the AC voltage $v_{AC}$ may be rotated clockwise by $(q - 1) \cdot 60°$ back to sector I, wherein q denotes the number of the sector (i.e., q = 1 ... 6). A space-vector mapping to short and long space-vectors $v_i$ on the real axis may be denoted as the first space-vector $v_1$ and the third space-vector $v_3$, respectively. A space-vector mapping to the short and long space-vectors $v_i$ on the line which is rotated 60° counterclockwise from the real axis may be denoted as the second space-vector $v_2$ and the fourth space-vector $v_4$, respectively. With this denotation of the space-vectors $v_i$, the same space-vector sequences of the space-vectors $v_i$ as derived for sector I may be utilized for all sectors with an odd number. For sectors with an even number, the space vectors $v_i$ may need to be permuted. A permutation for an even sector-number for a first modulation scheme described below may affect the $v_{1,1}$ and $v_{1,2}$ as well al $v_{2,1}$ and $v_{2,2}$. A permutation for an even sector-number for a second modulation scheme described below may affect the third and fourth space-vectors $v_3$ and $v_4$ as well as the first and second space-vectors $v_{1,q}$ and $v_{2,q}$ with $q \in [1, 2]$.

During the state-modulation, the switching commands are generated based on the state-sequence, which incorporates a subset of the non-forbidden states and none of the forbidden states.

During space-vector modulation, the switching commands are generated based on the space-vector sequence, which incorporates a subset of the space-vectors $v_i$ nearest to the reference voltage space-vector $v_{ref}$ as explained in the following, with i being a natural number from 0 to 5.

A conventional modulation scheme which employs nearest space-vectors to operate the electrical converter 10 has limited capabilities to reduce the peak-value of the partial DC-link voltage swing for a modulation index m approaching $2/\sqrt{3}$ because of the employment of zero common-mode voltage space-vectors (or middle SVs) with length $V_D/\sqrt{3}$, as e.g., the fifth space-vector $v_5$ in sector I. Remaining at the example of the fifth space-vector $v_5$ in sector I, the fifth space-vector $v_5$ does not have an alternative realization option and loads the DC-link capacitors 16, 18 from the AC side of the electrical converter 10 unequally. In particular, the first DC-link capacitor 16 is loaded from the AC side by $i_{D,p1} = -i_a$ and the second DC-link capacitor 18 is loaded by $i_{D,n1} = i_c$, wherein for most of the time $-i_a \neq i_c$ is valid. This may lead to voltage swing at the neutral point voltage $V_{NP}$. However, these zero common-mode voltage space-vectors correspond to the forbidden state for a 3-level converter which are not used when determining the state-sequence and correspondingly the space-vector sequence, according to the present invention. Therefore, the new modulation schemes described in the present description, in particular the below first and second modulation schemes, do not use the fifth space-vector $v_5$ in sector I, more generally all of the zero common-mode voltage space-vectors, during modulation.

The first modulation scheme may be referred to effective NP-voltage ripple suppression modulation scheme 1. A significant peak-value of the partial DC-link voltage swing only occurs typically for a high modulation index, e.g., m > 1. Thus, the first modulation scheme does not need to cover subsector I-1. By not using the fifth space-vector $v_5$ corresponding to one of the forbidden states for the first modulation scheme, the space-vectors $v_1$ of the remaining available space-vectors $v_i$ in sector I are the first to fourth space-vectors $v_1, v_2, v_3, v_4$. The third and fourth space-vectors $v_3$, $v_4$ load the DC-link capacitors 16, 18 from the AC side equally.

The first modulation scheme without the forbidden states, which may be referred to as first state-modulation scheme, may use the following states:

- for $0 \leq \varphi < 30°$: [p00], [Onn], [pnn], and [ppn] and/or, respectively,
- for $30° \leq \varphi < 60°$: [pp0], [00n], [pnn], and [ppn].

The corresponding first modulation scheme without the fifth space-vector $v_5$, which may be referred to as first space-vector-modulation scheme, may employ the following space-vectors $v_i$:

$0 \leq \varphi < 30°$: $v_{1,1}$, $v_{1,2}$, $v_3$, and $v_4$ (for a first space-vector sequence); and
$30° \leq \varphi < 60°$: $v_{2,1}$, $v_{2,2}$, $v_3$, and $v_4$ (for a second space-vector sequence).

The dwell-times $d_i$ of the alternative space-vectors $v_{1,1}$ and $v_{1,2}$, or $v_{2,1}$ and $v_{2,2}$ may be calculated such that a certain peak-value of the partial DC-link voltages $V_{D,p1}$, $V_{D,n1}$ results. One option is to compute the dwell-times $d_i$ such that an absolute value of a difference between the first positive partial DC-link voltage $V_{D,p1}$ and the first negative partial DC-link voltage $V_{D,n1}$ is minimized within one switching cycle. For $V_{D,p1} = V_{D,n1}$ and with the assumption that the phase output currents are fairly constant within one switching cycle, to give an example, the dwell-times $d_i$ of the space vectors $v_{1,1}$ and $v_{1,2}$, or the dwell-times $d_i$ of the space-vectors $v_{2,1}$ and $v_{2,2}$ are equal. The first modulation scheme may be used for a modulation index $m > 4/(3 \cdot \sqrt{3})$.

A possible sequencing of the states within one switching cycle of the first modulation scheme may be:

- [pnn] → [0nn] → [p00] → [ppn] → [p00] → [0nn] → [pnn], or
- [0nn] → [pnn] → [p00] → [ppn] → [p00] → [pnn] → [0nn] for $0 \leq \varphi < 30°$ (referred to as the first state-sequence);

and/or, respectively,

- [ppn] → [pp0] → [00n] → [pnn] → [00n] → [pp0] → [ppn], or
- [pnn] → [00n] → [ppn] → [pp0] → [ppn] → [00n] → [pnn] for 30° ≤ φ < 60° (referred to as the second state-sequence).

A corresponding possible sequencing of the space-vectors v; within one switching cycle of the first modulation scheme may be:

- $v_3 \to v_{1,2} \to v_{1,1} \to v_4 \to v_{1,1} \to v_{1,2} \to v_3$ or
- $v_{1,2} \to v_3 \to v_{1,1} \to v_4 \to v_{1,1} \to v_3 \to v_{1,2}$ for $0 \le \varphi < 30°$ (the first space-vector sequence); and
- $v_4 \to v_{2,1} \to v_{2,2} \to v_3 \to v_{2,2} \to v_{2,1} \to v_4$, or
- $v_3 \to v_{2,2} \to v_4 \to v_{2,1} \to v_4 \to v_{2,2} \to v_3$ for $30° \le \varphi < 60°$ (the second space-vector sequence).

Direct transitions of a phase output voltage from the negative to the positive DC-link rail voltage and vice versa are avoided with this sequencing. However, the number of switching actions of all phases a, b, c is increased from typically 6 (each phase is switched twice in a switching cycle) to 12 (each phase is switched 4 times within a switching cycle) or, respectively, 10 (one phase is switched 2 times and two phases are switched 4 times within a switching cycle). This may increase switching losses of the electrical converter 10.

To avoid the increase of the switching losses of the first modulation scheme, the second modulation scheme for effective NP-voltage ripple suppression may be derived. This second modulation scheme may be referred to as effective NP-voltage ripple suppression modulation scheme 2. To impact the peak-value of the partial DC-link voltage swing, the second modulation scheme may employ the states in sector I:

- [p00], [pp0], [pnn] and [ppn] (for a third state-sequence); or
- [Onn], [00n], [pnn] and [ppn] (for a fourth state-sequence)

and/or the corresponding space-vectors $v_i$:

- $v_{1,1}, v_{2,1}, v_3$ and $v_4$ (for a third space-vector sequence); or
- $v_{1,2}, v_{2,2}, v_3$ and $v_4$ (for a fourth space-vector sequence).

In case of a certain value of the difference of the partial DC-link voltages $V_{D,p1}$, $V_{D,n1}$, the third or fourth space-vector sequence may be applied depending on the operating conditions. For example in case $V_{D,p1} > V_{D,n1}$, and $-d_{1,q} \cdot I_a + d_{2,q} \cdot I_c$, > 0, where $d_{1,q}$ and $d_{2,q}$ are the dwell-times associated to $v_{1,q}$ and $v_{2,q}$ (q = 1 or 2), respectively, the fourth space-vector sequence is chosen. And in the other cases, the third space-vector sequence is chosen. The dwell-times d; may be calculated with the following additional restriction:

$$\delta_{q,2} = \delta_{12} \cdot \varphi_v / (\pi/3), \ \delta_{q,1} = \delta_{12} - \delta_{q,2} \ (\text{with } q = 1 \text{ or } 2),$$

where $\delta_{1,1}, \delta_{1,2}, \delta_{2,1}$, and $\delta_{2,2}$ are the duty-cycles associated with the dwell-times $d_i$ of the space-vectors $v_{1,1}, v_{1,2}, v_{2,1}$, and $v_{2,2}$, respectively, wherein the dwell-times correspond to the switching cycle times of the corresponding duty-cycles.

The second modulation scheme may lead to a higher peak-value of the partial DC-link voltage swing compared to the first modulation scheme. However, for the following state-sequence of the states within one switching cycle the number of switching actions of all three phases a, b, c can be reduced from 10 or 12 (first modulation scheme) to again 6 (second modulation scheme):

- [pnn] → [ppn] → [pp0] → [p00] → [pp0] → [ppn] → [pnn], or

- [p00] → [pp0] → [ppn] → [pnn] → [ppn] → [pp0] → [p00] (the third space-vector sequence);

- [ppn] → [pnn] → [0nn] → [00n] → [0nn] → [pnn] → [ppn], or

- [00n] → [0nn] → [pnn] → [ppn] → [pnn] → [0nn] → [00n] (the fourth space-vector sequence).

The associated space-vector sequences may be given by:

- $v_3 \to v_4 \to v_{2,1} \to v_{1,1} \to v_{2,1} \to v_4 \to v_3$, or
- $v_{1,1} \to v_{2,1} \to v_4 \to v_3 \to v_4 \to v_{2,1} \to v_{1,1}$ (the third space-vector sequence);
- $v_4 \to v_3 \to v_{1,2} \to v_{2,2} \to v_{1,2} \to v_3 \to v_4$, or

- $v_{2,2} \to v_{1,2} \to v_3 \to v_4 \to v_3 \to v_{1,2} \to v_{2,2}$ (the fourth space-vector sequence).

The third and fourth state- or space-vector sequences are constructed such that one phase is not switched within one switching cycle at all, but at the compromise that in one of the remaining two phases the voltage transits directly from the negative to the positive DC-link rail voltage and vice versa. The second modulation scheme may be utilized for a modulation index m > 2/3, which is lower than a minimum required modulation index m for the first modulation scheme.

A switch between the conventional space-vector modulation as it is known in the state-of-the-art and the effective NP-voltage ripple suppression modulation as presented in this description as the first and second modulation schemes and back to the conventional modulation may be achieved as follows:

In case the peak value of the neutral point voltage $V_{NP}$ exceeds a certain threshold, e.g., a first threshold, the effective NP-voltage ripple suppression modulation according to the first or second modulation scheme may be employed instead of the conventional modulation. Once modulating the electrical converter 10 with the first or second modulation scheme, changing back to the conventional modulation scheme may be achieved with the help of an estimate of the peak-value of the NP-voltage swing. This estimate may assess the peak-value of the NP-voltage ripple for the given operating conditions assuming the electrical converter 10 would be modulated with the standard modulation. In case the value of the estimate is lower than a certain threshold, e.g., a second threshold, it may be switched back to the conventional modulation. Typically, the value of first threshold is larger than the value of the second threshold to avoid switching back and forth between the conventional modulation and the first or second, respectively, modulation scheme. This switch-over scheme may be extended by changing first to the second modulation scheme with no increase of the switching losses, in case the peak value of the neutral point voltage $V_{NP}$ exceeds the first threshold. If the peak-value of the NP-voltage swing cannot be maintained below an additional threshold value, e.g., a third threshold, with the second modulation scheme, it may be finally switched to the first modulation scheme. The third threshold may be between the first and second threshold. The estimate may be carried out by simulation using a digital model of the electrical converter 10, as it is known in the state-of-the-art.

To summarize the new modulation approach presented herein and described in the foregoing, the modulation approach is described in form of method steps of the method for controlling the electrical converter 10, which may be carried out by the control unit 29, in the following:

Initially, the reference voltages $v_{a,ref}$, $v_{b,ref}$, $v_{c,ref}$ in the abc-frame for the three phases a, b, c of the three-phase AC voltage $v_{AC}$ may be determined. Optionally, the reference voltages $v_{a,ref}$, $v_{b,ref}$, $v_{c,ref}$ in the abc-frame may be determined depending on the reference value to be achieved at the AC terminal 14, wherein the reference value may be the torque reference $T_{ref}$ or the angular speed reference $\omega_{ref}$.

The reference voltages $v_{a,ref}$, $v_{b,ref}$, $v_{c,ref}$ in the abc-frame may be determined depending on the received reference value by determining the reference voltages $v_{a,ref}$, $v_{b,ref}$, $v_{c,ref}$ in the abc-frame depending on the reference voltage reference voltages $V_{\{d,q\},ref}$ in the dq-frame to be applied to the AC terminal 14, by employing the inverse Park-transformation, which may be determined from the reference value.

The state-sequence may be determined, wherein the state-sequence is free from any of the predetermined forbidden states.

Optionally, the state-sequence without the forbidden states is determined only when the modulation index m is larger than 2/3. When m is 2/3 or smaller than 2/3, a conventional state-sequence comprising a combination of all available states may be used. That the modulation index m is larger than 2/3 may be the predetermined condition which triggers the modulation without the forbidden states.

The switching signal SWS may be generated such that the states of the determined state-sequence may be applied for the corresponding dwell-times $d_i$. To this end, a corresponding dwell-time $d_i$ may be determined for each state of the determined state-sequence. For example, an absolute value of the difference between the first positive partial DC-link voltage $V_{D,p1}$ and the first negative partial DC-link voltage $V_{D,n1}$ may be determined and the dwell-times $d_i$ are determined such that the absolute value is minimized. This approach may be used when using the first modulation scheme. Alternatively or additionally, the state-sequence may be determined such that the absolute value is minimized. This approach may be used when using the second modulation scheme.

Optionally, the states of the determined state-sequence may be applied for the determined corresponding dwell-time $d_i$ only when the modulation index m is larger than $4/3 \cdot \sqrt{3}$. When the modulation index m is $4/3 \cdot \sqrt{3}$ or smaller than $4/3 \cdot \sqrt{3}$, the conventional state-sequence comprising conventionally determined dwell-times may be used. That the modulation index m is larger than $4/3 \cdot \sqrt{3}$ may be a predetermined condition which triggers the modulation with the first or second modulation scheme without the forbidden states. This approach may be used when using the first modulation scheme. Alternatively, the state-sequence may be determined such that the number of switching actions of the three-phase AC voltages $v_{AC}$ is minimized while the state-sequence is applied to the electrical converter 10. In this case, the second modulation scheme may be applied to the electrical converter 10.

The switching signal SWS for the electrical converter 10 is determined depending on the determined state-sequence and the determined dwell-times $d_i$.

At least a next switching instant is applied to the electrical converter 10 by supplying the switching signal SWS to the electrical converter 10.

The above inventive idea described with respect to the 3-level converter shown in figure 1 and at least in part to the 5-level converter shown in figure 2 may be easily extended to any capacitor-clamped converter topologies with a higher number of output voltage levels, e.g. to 7-, 9-, or more-level-converters.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

List of reference numerals

| | |
|---|---|
| 10 | electrical converter |
| 12 | DC terminal |
| 14 | AC terminal |
| 15 | DC-link |
| 16 | first positive DC-link capacitor |
| 18 | first negative DC-link capacitor |
| 20 | first switch |
| 22 | second switch |
| 24 | third switch |
| 25 | electrical converter system |
| 26 | DC device |
| 28 | AC device |
| 29 | control unit |
| 30 | sensor arrangement |
| 32 | controller |
| 34 | modulator |
| 36 | switching signal generator |
| 38 | transformation block |
| 40 | MTPA |
| 42 | current controller |
| 44 | inverse Park-transformation block |
| 46 | second positive DC-link capacitor |
| 48 | second negative DC-link capacitor |

| | |
|---|---|
| a, b, c | phases of three-phase AC current |
| $v_{a,ref}$, $v_{b,ref}$, $v_{c,ref}$ | reference voltages |
| $v_i$ | space-vectors |
| NP | neutral interconnection point |
| Px | positive interconnection point |
| Nx | negative interconnection point |
| $V_{NP}$ | neutral point voltage |
| n | negative DC-link rail |
| p | positive DC-link rail |
| $V_D$ | DC-link voltage |
| $V_{D,p1}$ | first positive partial DC-link voltage |
| $V_{D,p2}$ | second positive partial DC-link voltage |
| $V_{D,n1}$ | first negative partial DC-link voltage |
| $V_{D,n2}$ | second negative partial DC-link voltage |
| $C_{p1}$ | first positive DC-link capacitance |

| | |
|---|---|
| $C_{p2}$ | second positive DC-link capacitance |
| $C_{n1}$ | first negative DC-link capacitance |
| $C_{n2}$ | second negative DC-link capacitance |
| $T_{ref}$ | torque reference |
| $\omega$ | measured angular speed |
| $\omega_{ref}$ | angular speed reference |
| m | modulation index |
| $i_{D,p}$ | positive DC-link capacitor current |
| $i_{D,n}$ | negative DC-link capacitor current |
| $I_a$ | current of a-phase |
| $I_b$ | current of b-phase |
| $I_c$ | current of c-phase |
| $I_{\{a,b,c\}}$ | phase currents in abc-frame |
| $I_{\{d,q\}}$ | dq-currents in dq-frame |
| $I_{\{d,q\},ref}$ | reference currents in dq-frame |
| $V_{\{d,q\},ref}$ | reference voltages in dq-frame |
| $v_{AC}$ | AC voltage |
| $f_{AC}$ | AC frequency |
| $\theta$ | measured angle |
| SWS | switching signal |

**Claims**

1. A method for controlling an electrical converter (10), the electrical converter (10) comprising a DC terminal (12) coupled to a DC device (26), an AC terminal (14) coupled to an AC device (28), and a DC-link (15) having a neutral interconnection point (NP) providing a neutral point voltage ($V_{NP}$), at least one positive interconnection point (Px) coupled to a positive potential terminal of the DC device (26), and at least one negative interconnection point (Nx) coupled to a negative potential terminal of the DC device (26), and the electrical converter (10) being configured for converting a DC-link voltage ($V_D$) supplied by the DC device (26) via the DC terminal (12) into a three-phase AC voltage ($v_{AC}$) supplied to the AC device (28) via the AC terminal (14) or vice versa, wherein at least a first positive partial DC-link voltage ($V_{D,px}$) results between the positive interconnection point (Px) and the neutral interconnection point (NP) and at least a first negative partial DC-link voltage ($V_{D,nx}$) results between the neutral interconnection point (NP) and the negative interconnection point (Nx), the method comprising the steps of:

   determining reference voltages ($v_{a,ref}$, $v_{b,ref}$, $v_{c,ref}$) for the three phases (a, b, c) of the three-phase AC voltage ($v_{AC}$);
   determining a state-sequence, wherein the state-sequence is a sequence of states of the three phases (a, b, c) to be applied one after the other at the AC terminal (14) such that the reference voltages ($v_{a,ref}$, $v_{b,ref}$, $v_{c,ref}$) are in average generated at the corresponding phases (a, b, c) of the AC terminal (14), wherein the state-sequence is free from any predetermined forbidden states;
   determining an absolute value of the difference between a sum over all the positive partial DC-link voltages ($V_{D,px}$) and a sum over all the negative partial DC-link voltages (VD,nx);
   determining for each state of the determined state-sequence a corresponding dwell-time ($d_i$) such that the absolute value of the difference is minimized during one switching cycle of the electrical converter (10);
   generating a switching signal (SWS) for the electrical converter (10) depending on the determined state-sequence such that each state of the determined state-sequence is applied at the AC terminal (14) for the determined corresponding dwell-time ($d_i$); and
   applying at least a next switching instant to the electrical converter (10) by supplying the switching signal (SWS) to the electrical converter (10).

2. The method of claim 1, wherein

   each of the states is **characterized by** a set of the interconnection points PL, Q, and NL, to which respective ones of the three phases (a, b, c) are connected in the corresponding state, where the interconnection point Q is one of the union

$$NP \wedge N(L-j) \wedge P(L-j) \quad \text{with } j = \begin{cases} \text{empty}, & \text{for } L-1 < 1 \\ 1...L-1, & \text{for } L-1 \geq 1 \end{cases},$$

where L is equal to the number of voltage levels minus one divided by two, and where in case of j being empty the corresponding connection point does not exist, and
the forbidden states are sets comprising permutations of the interconnection points PL, NL, and Q.

3. The method of one of the preceding claims, wherein
the predetermined forbidden states of the three phases (a, b, c) of the three-phase AC voltage ($v_{AC}$) are determined in advance.

4. The method of one of the preceding claims, wherein

each of the states is realized by a corresponding space-vector ($v_i$),
the reference voltages ($v_{a,ref}$, $v_{b,ref}$, $v_{c,ref}$) are represented by a reference voltage space-vector ($v_{ref}$),
a space-vector sequence is determined depending on the determined state-sequence, wherein the space-vector sequence is a sequence of the space-vectors ($v_i$) to be applied one after the other at the AC terminal (14) such that the reference space-vector ($v_{ref}$) is in average at least approximately represented by the space-vector sequence, and
the switching signal (SWS) is determined depending on the determined state-sequence such that each state of the determined state-sequence is applied at the AC terminal (14) for the determined corresponding dwell-time ($d_i$) by determining the switching signal (SWS) depending on the determined space-vector sequence such that each space-vector ($v_i$) of the determined space-vector sequence is applied at the AC terminal (14) for the dwell-time ($d_i$) of the corresponding state.

5. The method of one of the preceding claims, comprising:
receiving at least a reference value to be achieved at the AC terminal (14) wherein the reference voltages ($v_{a,ref}$, $v_{b,ref}$, $v_{c,ref}$) are determined depending on the received reference value.

6. The method of claim 5, wherein

the AC device (28) is an electric motor,
the reference value is a torque reference ($T_{ref}$) of a torque to be generated by the electric motor; or
the reference value is an angular speed reference ($\omega_{ref}$) of an angular speed to be achieved by the electric motor.

7. The method of one of claims 5 or 6, comprising
determining reference voltages ($V_{\{d,q\},ref}$) in the dq-frame from the reference value, wherein the reference voltages ($V_{\{d,q\},ref}$) in the dq-frame correspond to the voltages to be applied to the AC terminal (14), wherein the reference voltages ($v_{a,ref}$, $v_{b,ref}$, $v_{c,ref}$) in the abc-frame are determined depending on the received reference value by determining the reference voltages ($v_{a,ref}$, $v_{b,ref}$, $v_{c,ref}$) in the abc-frame depending on the reference voltages ($V_{\{d,q\},ref}$) in the dq-frame.

8. The method according to claim 7, wherein

a modulation index (m) is determined from the reference voltages ($V_{\{d,q\},ref}$) in the dq-frame, and
the state-sequence without the forbidden states is determined only when the modulation index m is larger than 2/3.

9. The method according to one of the preceding claims, wherein the state-sequence is determined such that the absolute value of the difference is minimized.

10. The method according to one of the claims 8 or 9, wherein
the states of the determined state-sequence are applied for the determined corresponding dwell-time ($d_i$) only when the modulation index m is larger than $4/3 \cdot \sqrt{3}$.

11. The method according to one of the preceding claims, wherein
the state-sequence is determined such that the number of switching actions of the three-phase AC voltage ($v_{AC}$) is minimized while the state-sequence is applied to the electrical converter (10).

12. A control unit (29) for controlling an electrical converter (10), the electrical converter (10) comprising a DC terminal (12) coupled to a DC device (26), an AC terminal (14) coupled to a AC device (28), and a DC-link (15) having a neutral interconnection point (NP) providing a neutral point voltage ($V_{NP}$), at least one positive interconnection point (Px) coupled to a positive potential terminal of the DC device (26), and at least one negative interconnection point (Nx) coupled to a negative potential terminal of the DC device (26), and the electrical converter (10) being configured for converting a DC-link voltage ($V_D$) supplied by the DC device (26) via the DC terminal (12) into a three-phase AC voltage ($v_{AC}$) supplied to the AC device (28) via the AC terminal (14) or vice versa, wherein at least a first positive partial DC-link voltage ($V_{D,px}$) results between the positive interconnection point (Px) and the neutral interconnection point (NP) and at least a first negative partial DC-link voltage ($V_{D,nx}$) results between the neutral interconnection point (NP) and the negative interconnection point (Nx), the control unit (29) comprising:

a memory for storing at least one state-sequence comprising one or more states; and
a processor communicatively coupled to the memory and being configured to carry out the method according to claims 1 to 11.

13. An electrical converter system (25), comprising:

an electrical converter (10) comprising a DC terminal (12) coupled to a DC device (26), an AC terminal (14) coupled to a AC device (28), and a DC-link (15) having a neutral interconnection point (NP) providing a neutral point voltage ($V_{NP}$), at least one a positive interconnection point (Px) coupled to a positive potential terminal of the DC device (26), and at least one negative interconnection point (Nx) coupled to a negative potential terminal of the DC device (26), and a neutral point (NP) providing a neutral point voltage ($V_{NP}$), wherein the electrical converter (10) is configured for converting a DC-link voltage ($V_D$) supplied by the DC device (26) via the DC terminal (12) into a three-phase AC voltage ($v_{AC}$) supplied to the AC device (28) via the AC terminal (14) or vice versa, wherein at least a first positive partial DC-link voltage ($V_{D,px}$) results between the positive interconnection point (Px) and the neutral interconnection point (NP) and at least a first negative partial DC-link voltage ($V_{D,nx}$) results between the neutral interconnection point (NP) and the negative interconnection point (Nx); and
a control unit according to claim 12.

# Fig. 1

# Fig. 2

# Fig. 3

# Fig. 4

## Fig. 5

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 304 082 A1 (ABB SCHWEIZ AG [CH]) 10 January 2024 (2024-01-10) * paragraphs [0036], [0041], [0042], [0053] - paragraph [0059]; figures 1,2 * ----- | 1-13 | INV. H02M7/487 H02M7/5387 H02M1/12 H02M1/14 |
| A | JOSE RODRIGUEZ ET AL: "A Survey on Neutral-Point-Clamped Inverters", IEEE TRANSACTIONS ON INDUSTRIAL ELECTRONICS, IEEE SERVICE CENTER, PISCATAWAY, NJ, USA, vol. 57, no. 7, 1 July 2010 (2010-07-01), pages 2219-2230, XP011295886, ISSN: 0278-0046 * page 1 - page 2 * ----- | 1-13 | H02M1/32 |
| A | US 2017/222574 A1 (LEWIS DAVID C [US]) 3 August 2017 (2017-08-03) * paragraphs [0009], [0030]; figures 1, 2 * ----- | 1-13 | |
| A | US 6 031 738 A (LIPO THOMAS A [US] ET AL) 29 February 2000 (2000-02-29) * figures 14, 18, 20 * ----- | 1-13 | TECHNICAL FIELDS SEARCHED (IPC) H02M |

The present search report has been drawn up for all claims

| Place of search | Date of completion of the search | Examiner |
|---|---|---|
| The Hague | 5 December 2024 | Zeljkovic, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 7042

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2024

| Patent document cited in search report | | Publication date | Patent family member(s) | Publication date |
|---|---|---|---|---|
| EP 4304082 | A1 | 10-01-2024 | NONE | |
| US 2017222574 | A1 | 03-08-2017 | NONE | |
| US 6031738 | A | 29-02-2000 | NONE | |

EPO FORM P0459

For more details about this annex : see Official Journal of the European Patent Office, No. 12/82